# EUROPEAN PATENT SPECIFICATION

(11) **EP 3 478 863 B1**
(45) Date of publication and mention of the grant of the patent: **10.11.2021**
(21) Application number: 17733868.8
(22) Date of filing: 03.07.2017
(51) Int. Cl.: C22B 3/44, C22B 19/20, C22B 23/00

(54) **RECOVERY OF HEAVY METALS BY SELECTIVE PRECIPITATION**
WIEDERGEWINNUNG VON SCHWERMETALLEN DURCH SELEKTIVE FÄLLUNG
RÉCUPÉRATION DE MÉTAUX LOURDS PAR PRÉCIPITATION SÉLECTIVE

(30) Priority: 04.07.2016 EP 16177809
(43) Date of publication of application: 08.05.2019
(73) Proprietor: Paques I.P. B.V., 8561 EL Balk (NL)
(72) Inventor: DIJKMAN, Hendrik, 8561 EL Balk (NL); GONZÁLEZ CONTRERAS, Paula, 8561 EL Balk (NL)
(74) Representative: Nederlandsch Octrooibureau
(86) International application number: PCT/EP2017/066462
(87) International publication number: WO 2018/007297

(56) References cited:
- EP-A1- 2 584 055
- WO-A1-00/29605
- WO-A1-2011/035380
- GB-A- 1 439 100
- HUISMAN J L ET AL: "Biologically produced sulphide for purification of process streams, effluent treatment and recovery of metals in the metal and mining industry", HYDROMETALLURGY, ELSEVIER SCIENTIFIC PUBLISHING CY. AMSTERDAM, NL, vol. 83, no. 1-4, 1 September 2006 (2006-09-01), pages 106-113, XP027884138, ISSN: 0304-386X [retrieved on 2006-09-01]

## Description

### Field of the invention

The invention pertains to a process of selectively separating one or more desired heavy metals such as copper from multi metal streams, for example metal mining leachates, wherein the multi metal stream contains one or more metals such as copper, arsenic, zinc, nickel, cobalt and iron (II).

### Background

The use of sulfide for precipitating and recovering heavy metals such as copper from heavy metal-containing streams is widely known in the art. WO97/29055 teaches contacting a stream containing copper (and/or other heavy metals) and sulfate with hydrogen sulfide to precipitate copper sulfide, separating the copper sulfide and subsequently biologically reducing sulfate to sulfide, which sulfide is then recycled to the precipitation step. WO00/029605 discloses biological reduction of elemental sulfur to gaseous hydrogen sulfide for use in precipitating heavy metals, such as copper or lead, as their sulfides. WO00/039035 discloses heavy metal precipitation involving biological reduction of sulfur compounds and using a sand filterto separate precipitated metal sulfides from the treated waste stream.

GB 1378053 discloses treatment of a chlorine-leached stream containing copper and nickel with nickel sulfide and elemental sulfur to precipitate copper sulfide and solubilise nickel. The results show that copper precipitation by addition of nickel sulfide was poor, unless substantial amounts of elemental sulfur were added. The nickel sulfide is used as a matte and not produced on site.

JP-2012-107264 discloses separation of copper ions from an acidic nickel-containing solution, e.g. originating from an electrolytic nickel production, by adding nickel sulfide and by separating solids from the resulting slurries at elevated temperature (80-100°C) after the copper ion concentration reaches an equilibrium. The nickel sulfide is not produced in-line. JP-2010-284581 describes separation of copper from a solution containing copper ions and arsenic acid, by adding zinc sulfide at elevated temperature (75°C). The zinc sulfide, which is produced separately, is added in about equimolar amounts, or at lower level but then in the presence of oxygen, while suppressing reduction of arsenic(V) to arsenic(III).

EP 2584055 discloses a copper ion removing method of removing copper ions from a copper containing nickel chloride solution which has been produced by chlorine leaching a nickel sulfide, the method comprising: a first step of adding a nickel sulfide to the copper containing nickel chloride solution for reduction of, at least, bivalent copper ions in the copper containing nickel chloride solution to univalent copper ions; and a second step of adding a nickel mat and a residue produced by the chlorine leaching to a slurry produced by the first step to solidify of the univalent copper ions in the slurry as a sulfide.

There is a need for a process capable of selectively recovering heavy metals from metal-containing streams on the basis of sulfide precipitation with minimum requirements of energy and added chemicals and minimum disposal of metallic residues, and without the need of demanding and potentially high-risk gas recycles. For example, the use of H₂S gas recycle systems entails high investment and operational cost and should therefore be omitted. In case of copper recovery, combination of selective precipitation of CuS and biological H₂S production in one reactor would be desirable for improving process efficiency, but this is very difficult because at the conditions required for the anaerobic bacteria (low ORP/redox) other metals such as zinc will co-precipitate. A solution to this problem is needed.

### Summary of the invention

It was found that heavy metals can be selectively separated from a liquid medium containing these heavy metals by adding a slurry of a metal sulfide of intermediate solubility in a first reactor, separating a metal sulfide of low solubility, treating the resulting liquid with a biologically produced sulfide source in line in a second reactor to reproduce the metal sulfide of intermediate solubility, and returning part of the metal sulfide of intermediate solubility to the first reactor.

### Brief description of the drawings

The accompanying figures diagrammatically show embodiments of the process of the invention. These embodiments are further described below.

### Detailed description of the invention

The invention thus pertains to a process for selectively separating at least one first heavy metal having a first solubility of its sulfide from a liquid medium containing at least the first heavy metal in dissolved form. The process is defined in appended claim 1. In particular, the process comprises:
(a) contacting the liquid medium with a precipitate of a sulfide of at least one second heavy metal, said sulfide of the at least one second heavy metal having a second solubility, said second solubility being higher than said first solubility, in a first reactor, to produce a precipitate of a sulfide of the at least one first heavy metal and a solution containing the at least one second heavy metal;
(b) separating the precipitate of the at least one first heavy metal sulfide from the solution containing the at least one second heavy metal;
(c) contacting the solution of the at least one second heavy metal with a source of sulfide produced by biological conversion of a sulfur compound, in a second reactor, to produce a precipitate of a sulfide of the at least one second heavy metal and a treated solution, and
(d) returning at least part of the precipitate of the sulfide of the at least one second heavy metal to step (a).

In the present description, reference is typically made to copper as a first heavy metal being precipitated as its sulfide in the first reactor and zinc as a second heavy metal being precipitated as its sulfide in the second reactor. Thus, the process, in an exemplary embodiment for selectively separating at least copper from a liquid medium, comprises:
(a) contacting the liquid medium with a precipitate of zinc sulfide, in a first reactor, to produce a precipitate of copper sulfide and a solution containing zinc;
(b) separating the precipitate of copper sulfide from the solution containing zinc;
(c) contacting the solution of zinc with a source of sulfide produced by biological conversion of a sulfur compound, in a second reactor, to produce a precipitate of zinc sulfide and a treated solution, and
(d) returning at least part of the precipitate of the zinc sulfide to step (a).

However, the process equally works for combinations of metals in which there is more than one first metal, such as copper and antimony, and/or more than one second metal, such as nickel and iron(II), as long as any first heavy metals have solubilities of their sulfides which are lower than the solubilities of the sulfide(s) of any second heavy metal(s). Here below, reference is made to "the first heavy metal" and "the second heavy metal", but these are to be understood as also comprising more than one first heavy metal and more than one second heavy metal, respectively.

Also, other pairs of (one or more) first and (one or more) second heavy metals having low but different sulfide solubilities can be treated according to the invention, for example copper (first) and nickel (second), copper (first) and tin (second), arsenic (first) and nickel (second), lead (first) and zinc (second), zinc (first) and iron(II) (second) and nickel (second), etc. These and other pairs of heavy metals can be substituted in the exemplary embodiment defined above instead of copper and zinc, and are equally part of the present disclosure.

The term "heavy metals" is used herein as common in the art, i.e. metals having an atomic number higher than 20 (calcium) and having a low solubility of their sulfides or hydroxides. In general, for the purpose of the present invention, these comprise transition metals, including lanthanides, of columns 3-16, in particular columns 4-16, more in particular columns 7-15, of row 4 and higher, in particular of rows 4-6, more in particular of rows 4 and 5 of the Periodic Table. Most prominent examples include Mn, Fe, Co, Ni, Cu, Zn, As, Pd, Ag, Cd, Sb, Hg, Pb, Bi. Solubilities of heavy metal sulfides can be found in common handbooks, such as Handbook of Chemistry and Physics. As an example, the following relative solubilities of heavy metals sulfides apply at 25 °C (at pH 0.5-5) in decreasing order: MnS > FeS > NiS ≈CoS > ZnS > As₂S₃ > PbS > CuS > Ag₂S > HgS. In this series, the relative solubility of As₂S₃ applies at a narrower pH range of about 1 to 2.5; at pH values between 2.5 and 4 its solubility is between ZnS and CoS (see e.g. "Heavy Metal Reduction" www.phadjustment.com/TArticles/Heavy_Metal_Reduction.html).

It is also possible to separate two or more heavy metals by repeating steps (a) and (b) at different conditions, such as different pH values and/or different (or additional) levels of second heavy metal sulfide precipitates, in optional third and further reactors downstream of the first reactor and upstream of the second reactor. Thus, in the present process, the liquid medium can further contain at least one third heavy metal having a third solubility of its sulfide, which third solubility is intermediate between said first solubility and said second solubility. Such a process thus comprises:
(a) contacting the liquid medium with a precipitate of a sulfide of the at least one second heavy metal, in a first reactor, to produce a precipitate of a sulfide of the at least one first heavy metal and a solution containing the at least one second heavy metal and at least one third heavy metal;
(b) separating the precipitate of the at least one first heavy metal sulfide from the solution containing the at least one second heavy metal and the at least third heavy metal;
   (a') contacting the solution containing the at least one second heavy metal and the at least one third heavy metal with a precipitate of a sulfide of the at least one second heavy metal, in a third reactor between the first and second reactor, to produce a precipitate of a sulfide of the at least one third heavy metal and a solution containing the at least one second heavy metal,
   (b') separating the precipitate of the at least one third heavy metal sulfide from the solution containing the at least one second heavy metal; and
(c) contacting the solution of the at least one second heavy metal with a source of sulfide produced by biological conversion of a sulfur compound, in a second reactor, to produce a precipitate of a sulfide of the at least one second heavy metal and a treated solution, and
(d) returning at least part of the precipitate of the sulfide of the at least one second heavy metal to steps (a) and (a').

A further extended process may additionally comprise, between steps (b') and (c):
(a") contacting the solution containing the at least one second heavy metal and further containing at least one fourth heavy metal having a fourth solubility of its sulfide, which fourth solubility is intermediate between said third solubility and said second solubility, with a precipitate of a sulfide of the at least one second heavy metal, in a fourth reactor between the third and second reactor, to produce a precipitate of a sulfide of the at least one fourth heavy metal and a solution containing the at least one second heavy metal,
(b") separating the precipitate of the at least one fourth metal sulfide from the solution containing the at least one second heavy metal;
wherein in step (d) precipitate of the sulfide of the at least one second heavy metal is returned to steps (a), (a') and (a").

Examples of combinations of three heavy metals (first, third and second) being separated include copper, arsenic and zinc; copper, zinc and nickel; copper, lead and nickel; silver, copper and cobalt; lead, nickel and iron(II); zinc, nickel and manganese. As an example of four different heavy metals being separated in four reactors, copper, zinc, nickel and iron(II) may be mentioned. Such combinations of three, four or even more different heavy metals, having increasing solubilities of their sulfides, can be selectively precipitated and recovered by the process of the invention.

The liquid medium containing copper (and other heavy metals) which is to be treated with the present process, is introduced into the first reactor in step (a). The liquid medium may contain between 20 and 15,000 mg of heavy metals per I, more particularly between 50 and 15,000 mg/l, most preferably between 100 and 5000 mg/l, of which between 5 and 5000 mg/l of copper (and/or other first heavy metals heaving very low sulfide (first) solubilities, such as lead, cadmium, etc.), preferably between 20 and 2000 mg, most in particular between 50 and 1000 mg first metal per I. The liquid medium may, and usually will, contain further heavy metals, i.e. heavy metals having a higher sulfide solubility than copper or lead, in particular including zinc, nickel, cobalt and/or iron, e.g. at a level of 10-12,000 mg/l, in particular 100-10,000 mg/l, especially 200-4000 mg/l, in total in case more than one of these metals are present. The liquid medium, especially when it is derived from a metal leaching process, will typically be acidic, having pH values, from 0 or even lower up to and above 4, in particular between 0.5 and 2.5. In a particular embodiment, the liquid medium may, and preferably does, contain between 100 mg and 20 g of sulfuric acid per I (between 1 and 200 mmol/l), more preferably between 500 mg and 5 g per I (5-50 mmol/l).

### First reactor (step (a))

The dissolved metal(s) with the lower sulfide solubility (first heavy metal(s)), e.g. copper and/or arsenic, are allowed to react with the recycled sulfide precipitate solids of the metal with the higher sulfide solubility (second heavy metal(s)) such as for example zinc, in the first reactor. It is noted that where reference is made to "first reactor", this may also be a series of separate reactors, e.g. two or three reactors, all of which serve to precipitate sulfide of the at least one first heavy metal. An advantage of such a series of first reactors will be an enhanced separation, i.e. lower contamination of first and second metals in each other's product streams. Separators may or may not be present between such plurality of first reactors, as long as there is solids separation after the last of the plurality of first reactors.

Typically the chemical reaction of the dissolved metal with dissolved sulfide is very fast, allowing for short hydraulic retention times in the first reactor. The hydraulic retention times (HRT) can be as short as 5 or 6 minutes up to a few hours, e.g. up to 5 hours, depending on the concentration of the dissolved metal in the feed water, type of metal precipitated and the pH and temperature of the solution. Preferred HRT are from 12 minutes (0.2 h) to 2 hours, more preferred from 0.25 to 1.5 hours. The production of the intermediate dissolved sulfide, which can be present at very low concentrations and originates from the (at least one) second heavy metal sulfide precipitate, depends on the rate of dissolution of the recycled metal sulfide precipitate. The rate of the dissolution will depend on the actual concentration of the precipitate in the reactor, the particle size of the precipitate supplied, the type of metal sulfide, the pH, the temperature and the mixing of the reactor.

The first reactor is typically of a type used for solid/liquid systems in which quite high density solids at high concentration need to be kept in suspension such as stirred tank reactors or gas mixed reactors. As unreacted metal sulfide of the higher solubility (e.g. zinc sulfide) will end up in the product containing the precipitate of the metal sulfide with the lower solubility (e.g. copper sulfide), it is very beneficial to increase the solids retention time (SRT) by recycling part of the separated product solids back to the first reactor. Depending on the metal concentrations in the feed, a solids retention time of between 0.25 day (6 hours) and 20 days, preferably between 0.3 and 7 days can be achieved when the solids are recycled to the first reactor in order to sustain a solids concentration of up to 150 g/l in the first reactor, e.g. a solids concentration of between 5 and 100 g/l.

Advantageous is that the particle size of second metal sulfide precipitates (e.g. zinc sulfide) introduced into the first reactor is in the micrometre range, e.g. between 1 and 20 µm, to speed up the dissolution in the first reactor. Particle size (of the zinc sulfide) fed to the first reactor can be controlled in the second reactor as discussed below.

The operating temperature of the first reactor is not critical, and is typically determined by the temperature of the feed stream. The temperature may be between 5 and 95°C, e.g. between 5 and 90°C, especially between 15 and 85°C. In a particular embodiment, the operating temperature of the first reactor may be between 40 and 80°C, or even 80-90°C. The first reactor is preferably suitable for continuous operation, although batch-wise operation is also feasible.

The first reactor can, in an alternative embodiment indicated above, also consist of two or more of these reactors in series, with intermittent solids separation (copper sulfide in the example), or, preferably, without intermittent solids separation, i.e. with direct fluid communication between the consecutive first reactors and with only solids separation after the last of the two or more first reactors, to further minimise reaction time between the less soluble sulfide to be precipitated (sulfide of the first heavy metal(s), e.g. copper sulfide) and the more soluble sulfide to be dissolved (sulfide of the second heavy metals(s), e.g. zinc sulfide), and to minimise contamination of the first metal sulfide product with the second or third metal sulfide.

In another embodiment referred to above, also two reactors, referred herein as first and third reactors, can be used where two different metals with two different lower sulfide solubilities are sequentially recovered using recycled second metal sulfide precipitate produced in the second reactor. An example here is sequential and selective recovery of Cu as CuS, As as As₂S₃, using ZnS as third and partly recycled product.

The conditions applied in such a third reactor can be similar to those applied in the first reactor. For example, the pH may be between 1 and 3; in particular when the third metal is arsenic and the second metal is zinc, the pH should preferably not exceed 2.5, most preferably be below 2, while in other combinations, e.g. arsenic as third metal, with nickel, cobalt or iron, or lead or tin or cadmium as the second metal, higher pH values, up to e.g. 4 can be employed. Advantageously, a hydraulic retention time between 0.1 and 5 hours, more preferably between 0.25 and 3 h and/or a solids retention time between 0.25 days (6 h) and 14 days, more in particular between 0.3 and 7 days can be maintained in the third reactor.

In the selective recovery accomplished by the separation of steps (b), optionally (b'), and (d), preferably less than 5 % impurities of the other metals can be found in the different metal sulfide products.

As a result of the higher solubility of the second heavy metal sulfide (zinc or nickel sulfide etc.) compared to the first heavy metal sulfide (copper or cadmium sulfide etc.), the feeding of the precipitate of the second heavy metal sulfide (zinc sulfide) produces a precipitate of the first heavy metal sulfide (copper sulfide) and the dissolution of the second heavy metal (zinc). The amount of second heavy metal sulfide precipitate (e.g. ZnS) supplied to the first reactor is preferably such that the slurry contains a substantially equimolar level of zinc sulfide (or a intermediately soluble sulfide of another metal, such as nickel of cobalt) to the amount of the first metal (copper in this example) fed to the first reactor in step (a). Thus, for a liquid feed medium stream containing e.g. 200 mg (3.15 mmol) copper per I, a slurry containing 307 mg zinc sulfide (corresponding to 206 mg zinc) for each litre of liquid feed medium is preferably introduced in the first reactor. Preferably, a stoichiometric excess of between 0.01 and 1% of zinc sulfide is used. The amount of ZnS added to the first reactor can be controlled for example by controlling the speed of the ZnS slurry supply pump based on on-line analysis of the dissolved copper (and zinc) concentrations in the feed stream and in (or after) the first reactor. Also measuring the Oxidation Reduction Potential (ORP) can be used for this purpose.

Where a third metal is precipitated in step (a') and separated in step (b'), the amount of second heavy metal sulfide precipitate (e.g. ZnS) supplied to the third reactor is also preferably such that the slurry contains a substantially equimolar level of zinc sulfide (or an intermediately soluble sulfide of another metal, such as nickel or cobalt) to the amount of the third metal (arsenic in this example) fed to the third reactor in step (a'). Thus, for a liquid feed medium stream containing e.g. 150 mg (2.0 mmol) arsenic per I (in addition to e.g. copper which was removed upstream in steps (a) and (b), a slurry containing 294 mg zinc sulfide (corresponding to 197 mg zinc) for each litre of liquid feed medium is preferably introduced in the third reactor. Preferably, a stoichiometric excess of between 0.01 and 1% of zinc sulfide is used here too. The amount added can be controlled as described above.

In some applications the incoming metal-containing aqueous solution also contains ferric (III) iron. Ferric iron reacts fast with H₂S to produce dissolved ferrous iron and elemental sulfur. The amount of second metal sulfide precipitate sent to the first reactor needs to be corrected for this amount of sulfide consumed and can be determined by also analysing ferric in the feed. Alternatively ferric iron can be removed upstream the first reactor by lime precipitation at a pH of around pH 2.5, which is low enough to leave the first, second and third metals in solution. In view of the different behaviour or ferric and ferrous sulfide, iron as described herein refers to ferrous (iron II) unless otherwise specified.

### Solids separation downstream the first reactor (step (b))

In step (b) of the process of the invention, i.e. after the first reactor, the liquid effluent of the first reactor, containing precipitated first heavy metal(s) (copper) sulfide and dissolved second and possibly further heavy metal(s) (zinc), is subjected to a solids separation step, to remove copper sulfide from the effluent. The solids can be separated from the solution using typical solid-liquid separation units based on settling and/or thickening, filtration, centrifugation or other. A concentrated stream of typically 10- 45 % dry solids content can be obtained which then is partly recycled back to the first reactor and partly removed as product stream. The product stream can be further dewatered to typically 70% dry solids content using typical dewatering units like filter presses, belt presses, dryers or others. The separated first heavy metal(s) sulfide (copper sulfide) can be further treated and then be conditioned for shipping or for direct use, or be converted to metallic species such as copper, copper oxide or other (copper) compounds in a manner known as such.

The same applies *mutatis mutandis* to the solids separation of additional step (b') for separating sulfide of one or more third heavy metal(s), such as arsenic, with preferred recycle of a part of the precipitate to the third reactor.

### Second reactor (step (c))

The liquid phase (solution) resulting from the separation step (b), or, if applied, step (b'), which contains dissolved second heavy metal(s) (zinc), is fed to the second reactor in step (c) of the present process. In the second reactor, the liquid is contacted with a source of sulfide. A source of sulfide as described herein is understood to comprise any divalent sulfur species, whether anionic or neutral, which in an aqueous environment will produce, or will be equivalent to, hydrogen sulfide. The sulfide source will typically be hydrogen sulfide (H₂S) in gaseous or dissolved form. The amount of sulfide used in the second reactor in principle at least equals the corresponding amount of copper sulfide separated off in step (b), plus other sulfide such as arsenic sulfide separated off in step (b'). Depending on the level of the various second heavy metals (cobalt, nickel, zinc, iron, manganese, possibly further metals) already present in the liquid feed medium introduced in the first reactor in step (a), the amount of sulfide supplied to step (c) may be selected to be such that essentially all of the load of heavy metals is precipitated. The second reactor may be operated batch-wise or, preferably, continuously.

The sulfide source may be introduced into the second reactor, e.g. in the form of gaseous H₂S or an aqueous hydrosulfide (HS⁻) solution. In such an embodiment, the second reactor may be a relatively simple mixing reactor, having the necessary inlets (for zinc-containing effluent from the first reactor and for gaseous or liquid sulfide source), and outlets, for effluent containing metal sulfide precipitate and off-gas.

It is preferred in step (c) that the sulfide source is produced *in situ* by (bio)chemical conversion, so as to avoid the need of handling of (gaseous) H₂S. An especially advantageous way of producing the sulfide source (in particular hydrosulfide (HS⁻) or dissolved H₂S) *in situ* is by biological conversion of elemental sulfur or sulfur compounds of higher oxidation state. Several biological conversions yielding hydrosulfide are available such as shown below in (half) reaction equations:
i) Reduction of sulfate (a) and/or sulfite (b) and/or thiosulfate (c):
   (a) SO₄²⁻ + 8 e⁻ + 9 H⁺ → HS⁻ +4 H₂O
   (b) HSO₃⁻ + 6 e⁻ + 6 H⁺ → HS⁻ + 3 H₂O
   (c) HS₂O₃⁻ + 8 e⁻ + 7 H⁺ → 2 HS⁻ + 3 H₂O
ii) Reduction of elemental sulfur:

   S₈ + 16 e⁻ + 8 H⁺ → 8 HS⁻
iii) Disproportionation (or hydrolysis) of thiosulfate:

   HS₂O₃⁻ + H₂O → SO₄²⁻ + HS⁻ + 2 H⁺
iv) Disproportionation of sulfite:

   4 HSO₃⁻ → 3 SO₄²⁻ + HS⁻ + 3 H⁺
v) Disproportionation of elemental sulfur:

   S₈ + 8 H₂O → 2 SO₄²⁻ + 6 HS⁻ + 10 H⁺

Thus, the process, in a preferred embodiment wherein the sulfide source is produced in the second reactor, for selectively separating, for example, at least copper from a liquid medium, comprises:
(a) contacting the liquid medium with a precipitate of zinc sulfide, in a first reactor, to produce a precipitate of copper sulfide and a solution containing zinc;
(b) separating the precipitate of copper sulfide from the solution containing zinc;
(c) contacting the solution of zinc with a source of sulfide, in a second reactor, to produce a precipitate of zinc sulfide and a treated solution,
   wherein the second reactor contains sulfur-converting (reducing or disproportionating) bacteria or archaea and the source of sulfide is produced by feeding a zero-valent or higher valent sulfur compound, such as elemental sulfur, sulfate, thiosulfate and/or sulfite, to the second reactor and biologically converting it to sulfide; and
(d) returning at least part of the precipitate of the zinc sulfide to step (a).

In this embodiment, copper and zinc as first and second heavy metals, respectively, may be extended or replaced by other pairs of first and second heavy metals, such as antimony and arsenic, copper and nickel, etc. as described above, and a third or even further heavy metal may additionally be separated in a third reactor and further reactor, also operated batch-wise or, preferably, continuously, as described above.

Depending on the pH in the reaction medium where the biological conversion is performed, the sulfide produced by the biological conversion may be in the form of hydrosulfide (or bisulfide: HS⁻) as shown above, or as dissolved hydrogen sulfide (H₂S), in the latter event taking one hydrogen ion from the right side of the above reaction equations. For the biological reduction of sulfate, elemental sulfur and the like, to produce sulfide, an electron donor is required. Suitable electron donors include hydrogen gas, carbon monoxide, alcohols (ethanol, methanol etc.), short-chain fatty acids (acetic, propionic, butyric, lactic acid, etc.) and other readily degradable organic compounds. Preferred organic compounds include CO, C₁-C₄ alcohols and polyols and C₁-C₄ carboxylic acids. For hydrogen and ethanol, as examples, the following reactions apply:

H₂ → 2 e⁻ + 2 H⁺

CH₃H₂OH + 3 H₂O → 2 CO₂ + 12 e⁻ + 12 H⁺

The substrate for biologically producing hydrosulfide as described above can be introduced as a liquid solution (sulfate, sulfite, thiosulfate) or as a gas (sulfur dioxide), or as a solid or an aqueous slurry (elemental sulfur). In the event that the initial metal-bearing liquid medium contains substantial levels of sulfuric acid, the substrate is already fed to the second reactor with the zinc-containing effluent of the first reactor, and biological sulfate reduction can produce the necessary sulfide. However, reduction of elemental sulfur may still be economically preferable then, because of the lower consumption of electron donor per mol of metal recovered.

Since the (hydro)sulfide will react with the zinc ions, if the pH is at the appropriate level (between 2 and 4), the total reactions including the electron-donating reactions (hydrogen as an example) are the following, when the biological conversion is performed in the same reactor as the zinc precipitation:
i) Reduction of sulfate and/or sulfite and/or thiosulfate:
   (a) SO₄²⁻ + 4 H₂ + Zn²⁺ → ZnS + 4 H₂O
   (b) HSO₃⁻ + 3 H₂ + Zn²⁺ → ZnS + H⁺+ 3 H₂O
   (c) HS₂O₃⁻ + 4 H₂ + 2 Zn²⁺ → 2 ZnS + 3 H⁺+ 3 H₂O
ii) Reduction of sulfur:

   S₈ + 8H₂ + 8 Zn²⁺ → 8 ZnS +16 H⁺
iii) Disproportionation of thiosulfate:

   HS₂O₃⁻ + H₂O + Zn²⁺ → SO₄²⁻ + ZnS + 3 H⁺
iv) Disproportionation of sulfite:

   4 HSO₃⁻ + Zn²⁺ → 3 SO₄²⁻ + ZnS + 4 H⁺
v) Disproportionation of elemental sulfur:

   S₈ + 8 H₂O + 6 Zn²⁺ → 2 SO₄²⁻ + 6 ZnS + 16 H⁺

It follows that the biological sulfate reduction reaction (i) is pH neutral, whereas the other reactions produce acid and thus may require pH control by addition of alkaline equivalents. For precipitation of e.g. copper and/or arsenic, a drop in pH is normally no problem for metal recovery efficiency. For a high recovery of e.g. zinc, a pH drop might need to be countered by addition of alkaline equivalents such as lime, limestone, caustic or others. It is sometimes preferred to increase the pH already in dedicated process units upstream the second reactor (zinc) in order to minimize gypsum and/or aluminium precipitates ending up in the second metal sulfide precipitate.

It is preferred that the biological conversion of sulfur compounds to produce (hydro)sulfide is carried out in the same (second) reactor. In this preferred embodiment, the second reactor may be an anaerobic reactor type, equipped with the required inlets and outlets preferably involving vertical internal circulation.

The pH in the second reactor is preferably between 1.5 and 5, more preferably between 2 and 4.5. The temperature may be ambient temperature, e.g. 15-25°, but mesophilic conditions (20-45°C), or even thermophilic conditions (40-95°C, especially 45-80°C) are preferred.

The bacteria or archaea capable of performing the selected biological conversion comprise those conventionally used in the art. Suitable bacterial and/or archaeal cultures can be obtained from any treatment plants in which sulfur compounds are subjected to biologically reduction or disproportionation, or from natural sites where such conversions take place, such as subterranean or submarine strata, soda lakes and the like. Repeated inoculating and scaling up of such cultures in pilot reactors using the appropriate conditions, including low pH and high metal loads, and, where appropriate, high temperatures, will result in the production of an effective microbial population.

Merely as an indicative example, some sulfur-reducing taxa can be mentioned. Thus, for biological reduction of sulfate, sulfite and/or elemental sulfur strains of the genera *Desulforomonas* (mesophilic), *Desulfotomaculum* KT7 (thermophilic), the species *Desulforolobus ambivalens, Acidianus infemus, Acidianus brierley, Stygiolobus azoricus* (mesophilic), *Thermoproteus neutrophilus, Thermoproteus tenax, Thermodiscus maritimus, Desulfurella sp.* (thermophilic), *Pyrobaculum islandicum, Pyrodictium occultum, Pyrodictium brockii, Thermotoga sp. (*hyperthermophilic), and other species of the genera *Desulfovibrio, Desulfotomaculum, Desulfomonas, Desulfobulbus, Desulfobacter, Desulfococcus, Desulfonema, Desulfosarcina, Desulfobacterium* and *Desulforomas* (mesophilic), *Desulfosporosinus, Desulfitobacterrium* (acidophilic) or mixed cultures of unidentified sulfur reducing bacteria are well suited. Also species of sulfur-reducing methanogenic bacteria or archaea such as from the genera *Methanococcus* and *Methanobacterium* are suitable, while other ones may be equally be used. For more information, see e.g. Sanchez-Andrea et al. J. Hazardous Materials 69 (2014) 98-109.

For the biological disproportionation of elemental sulfur (or thiosulfate or sulfite), the following genera are among the suitable ones: *Desulfovibrio, Desulfotomaculum, Desulfobulbus, Chlorobaculum* and/or *Desulfocapsa* bacteria, for example the species *Desulfocapsa thiozymogenes, Desulfocapsa sulfoexigens, Desulfovibrio desulfodismutans.* See also: Finster, J. Sulfur Chem. 29 (2008), 281-292.

In the second reactor, the second heavy metal, i.e. with the higher sulfide solubility (e.g. zinc) is precipitated using sulfide that is either supplied to or *in situ* produced in this reactor. Hydraulic retention times and solids retention times are similar to or longer than in the first reactor and similar types of reactors can be used. For example, the hydraulic retention time may be between 0.2 and 24 h, preferably 0.5-12 h, more preferably 1-8 hours. The solids retention time may be between 0.3 and 30 days, preferably between 1 and 10 days.

The solids retention time is especially relevant for the *in situ* H₂S production, as the solids retention time will also influence the concentration of active biomass that can be maintained and herewith the H₂S production capacity that can be reached.

The particle size of the heavy metal sulfide precipitated in the second reactor, e.g. ZnS, NiS, CoS or FeS) can be controlled to a large extent by minimising the oversaturation of the metal sulfide which can be controlled by controlling the excess dissolved sulfide and mixing the second reactor. Especially when the H₂S is generated biologically *in situ* in the second reactor, very small particle sizes in the micrometre range, e.g. between 1 and 20 µm, can be achieved by controlling the amount of electron donor supplied.

For *in situ* H₂S production, the required solids retention times depend on the conversion used and the conditions applied. For example, for reduction of elemental sulfur or sulfate using hydrogen gas as an electron donor, a solid retention time of 2-5 days is sufficient for a high H₂S production capacity. For organic electron donors such as for example ethanol, acetate, glycerol etc. or disproportionation of sulfur or thiosulfate, an increased solid retention time up to 30 days is beneficial. The exact relation and efficiencies will be different for all different conversions and at different conditions applied such as temperature, pH, salinity and presence of other dissolved metals in the second reactor.

When using hydrogen gas as an electron donor, it is advantageous to apply a gas recycle, so as to minimise loss of hydrogen gas from the system, and to enhance mixing in the second reactor. In this embodiment the hydrogen gas is supplied at the bottom of the second reactor using gas distributors at the bottom and gas collected at the top is partly recycled to the gas supply at the bottom, and partly carried off, with a hydrogen sulfide trap to prevent hydrogen sulfide from being vented. The gas bleed is only required in case traces of inert gas components like nitrogen gas and/or methane are present in de hydrogen feed gas. The reactor may also be provided with means for promoting a vertical circulation of the reactor medium, such as risers and downers.

### Solids separation downstream the second reactor (step (d))

After step (c), the effluent of the second reactor, containing zinc sulfide precipitate possibly together with other precipitates, is subjected to another solids separation step (d), to remove zinc sulfide from the effluent. A similar solids separation can be applied as for the separation after the first reactor.

In an alternative embodiment the solids separation downstream the second reactor is carried out in two steps where first the lighter biomass flocs are partly separated from metal sulfides having a much higher specific density. This allows return of an increased amount of biomass to the second reactor resulting in a higher biomass retention compared to the metal sulfide solid retention time. Higher biomass concentration allows for higher H₂S production rates and smaller sizing of the second reactor.

At least a part of the separated zinc sulfide is recycled to step (a) for precipitating copper (and/or other first heavy metals) from the initial copper-containing liquid medium, and, where appropriate, another part is recycled to step (a') for precipitating arsenic (and/or other third heavy metals) from the initial liquid medium. Depending on the level of zinc (and/or cobalt, nickel, etc.), compared to copper (and/or cadmium, lead, and/or arsenic, etc.) in the initial liquid medium, an excess of zinc sulfide, which is not needed for the precipitation of copper sulfide in step (a), can be carried off and optionally further treated and then be conditioned for shipping or for direct use, or be converted to metallic zinc or other zinc compounds such as zinc oxide in a manner known as such. The ratio of the amount of separated zinc sulfide which is returned as the slurry to step (a) (and optionally steps (a'), (a") etc.) and the amount is carried off and further processed can be 1-100 to 99-0, preferably 2-60 to 98-40 (on solids basis), depending on the levels of the first (and optionally third, fourth etc.) and second heavy metals in the initial metal-containing stream.

The treated solution obtained by separating off precipitated second metal sulfide, may be acceptable for discharge. Alternatively any further heavy metals (having higher solubilities than the solubility of second metal sulfides), such as nickel, manganese etc. may be removed by further precipitation or other chemical reactions, and then be discharged.

The process of the invention is particularly suitable for hydrometallurgical mining operations in which acidic metal-containing solutions are produced. Examples are gold mining (e.g. using hot acid leaching in autoclaves) and nickel mining (e.g. using heap leaching).

Typical metal-containing streams may contain 10-10,000 mg/l, in particular 20-2000 mg/l of different heavy metals like Cu, Zn, Ni and Co. The pH of such streams is normally low, e.g. 1-3, due to presence of sulfuric acid, and temperatures can be medium (around 30°C) to high (up to 80°C). Other "contaminants" that can be present can include arsenic and iron. Iron present in the form of Fe(III) can advantageously be removed first before H₂S precipitation takes place, as Fe(III) will consume H₂S upon reduction to form Fe(II) and elemental sulfur. Fe(III) can be precipitated upstream of the first reactor by adjusting the pH to around 2.5 by addition of CaO or CaCO₃. As a result, Fe(OH)₃ will precipitate and metals (Cu, Zn etc.) will remain in solution.

### Detailed description of the drawings

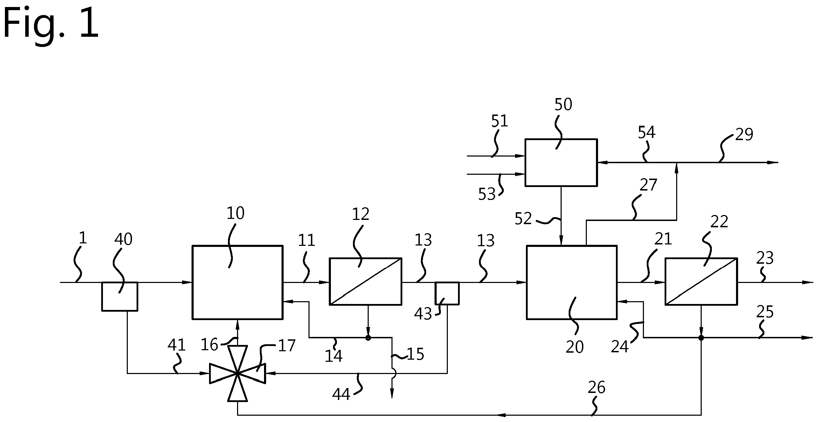

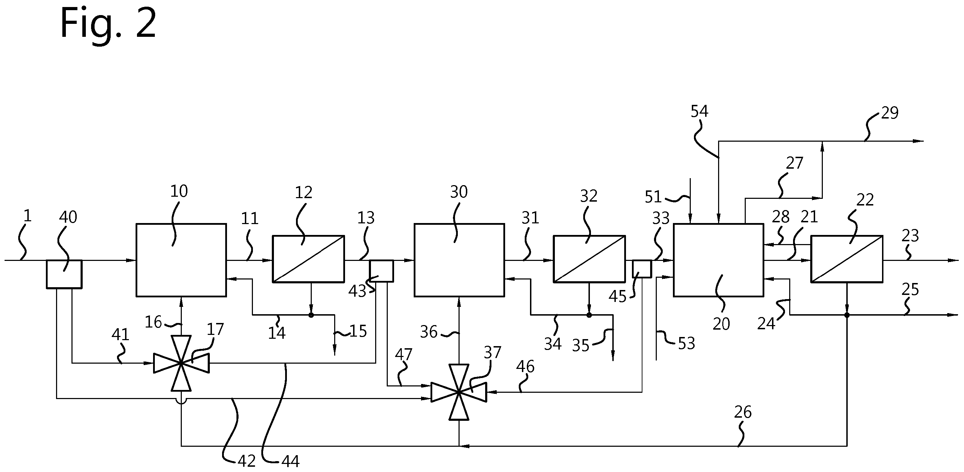

The accompanying figures diagrammatically show variants of the process of the invention. These are explained herein with reference with a feed stream containing copper(II), and zinc(II) as an example for Figure 1, or a feed stream containing copper(II), arsenic(III) and zinc(II) as an example for Figure 2, but it can be performed with any feed stream containing one or more heavy metals.

With reference to Figure 1, an acidic metal-containing stream 1 containing Cu²⁺ and Zn²⁺ is fed to a first reactor 10 where zinc sulfide is introduced through 16 to precipitate copper as CuS. The reactor effluent 11 is separated in solids separator 12 into a CuS-containing slurry (containing trace amounts of zinc and/or other metal sulfides) and a zinc-containing low-copper solution 13. Part of the CuS slurry is returned to reactor 10 through 14, to achieve a desired solid retention time in reactor 10, and the remainder is carried off through 15 for further processing and valorisation.

The feed stream of ZnS 16 into reactor 10 is controlled by a valve and/or pump 17 and signal lines 41 and/or 44, on the basis of information about the copper and zinc content in the initial metal solution 1 measured by specific metal analyser 40 or in the resulting solution 13 by analyser 43, or both.

The low-copper solution 13 is fed to a second reactor 20. Hydrogen sulfide (H₂S) is introduced into reactor 20 to precipitate zinc as sulfide. In the embodiment of Figure 1, reactor 20 can be a mixed reactor, where external H₂S is produced in bioreactor 50 fed with a supply 51 of a source of sulfur, such as elemental sulfur, and supply 53 for an electron donor such as hydrogen gas or lower alcohols or lower fatty acids, and the H₂S produced in bioreactor 50 is fed to reactor 20 as a gas (preferred) or as a solution, through line 52. H₂S may also be produced *in situ* as illustrated in Figure 2. Spent gas is carried off through 27, and part of the spent gas containing low amounts of H₂S is returned to reactor 50 through line 54. The remainder can be treated to remove residual H₂S and is carried off through 29. Depending on the electron donor used, the gas bleed 29 either removes inert gases building up in case of hydrogen gas as electron donor or removes produced carbon dioxide in case of an organic electron donor. Reactor 20 is provided with a pH control unit and a supply for alkali (not shown).

The reactor effluent 21 is separated in solids separator 22 into a ZnS-containing slurry (containing trace amounts of other metal sulfides) and a treated solution 23 which is low in copper and low in zinc, which can be treated to remove further metals if desired and ultimately be discharged. Part of the ZnS slurry may be returned to reactor 20 through 24, to achieve a desired solid retention time in reactor 20, and a part is fed to the copper-precipitating reactor 10 through 26 and 17/16 as described above. The remainder of the ZnS slurry is carried off through 25 for further processing and valorisation.

With reference to Figure 2, an acidic metal-containing stream 1 containing Cu²⁺, As³⁺ and Zn²⁺ is fed to a first reactor 10, where zinc sulfide is introduced through 16 to precipitate copper as CuS. The reactor effluent 11 is separated in solids separator 12 into a CuS-containing slurry (containing trace amounts of arsenic and/or zinc and/or other metal sulfides) and a zinc-containing and arsenic-containing, low-copper solution 13. As in Figure 1, part of the CuS slurry is returned to reactor 10 through 14, and the remainder is carried off through 15.

The low-copper solution 13 is fed to additional (third) reactor 30, where further zinc sulfide is introduced through 36 to precipitate arsenic as As₂S₃. The reactor effluent 31 is separated in solids separator 32 into an As₂S₃-containing slurry (containing trace amounts of copper and/or zinc and/or other metals as sulfides) and a zinc-containing low-copper, low-arsenic solution 33. Part of the As₂S₃ can be returned to reactor 30 through 34, to achieve a desired solid retention time in reactor 30, and the remainder is carried off through 35 for further processing and valorisation.

The feed stream of ZnS 36 into reactor 30 is controlled by valve and/or pump 37 and signal lines 42 and/or 46 and/or 47, respectively, on the basis of information about the arsenic and zinc content in the initial metal solution 1 by specific metal analyser 40 or in the intermediate solution 13 by analyser 43 or in the resulting solution 33 by analyser 45, or of two or all three of them.

The low-copper, low-arsenic solution 33 is fed to reactor 20, which in this embodiment is a bioreactor. Hydrogen sulfide (H₂S) is produced in reactor 20 to precipitate zinc as sulfide. Reactor 20 is fed with a source of sulfur (elemental sulfur, thiosulfate, sulfate, etc.) from 51. An electron donor, such as hydrogen gas or lower alcohols or lower fatty acids, is introduced through 53, and spent gas is carried off through 27. In case of hydrogen gas as electron donor, a part of the spent gas containing hydrogen is returned to reactor 20 through line 54. The remainder can be treated and is carried off through 29. Depending on the electron donor used, the gas bleed 29 either removes inert gases building up in case of hydrogen gas as electron donor or removes produced carbon dioxide in case of an organic electron donor. Reactor 20 is provided with a pH control unit and a supply for alkali (not shown).

The reactor effluent 21 is separated in solids separator 22 into a ZnS-containing slurry (containing trace amounts of other metal sulfides) and a treated low-copper, low-arsenic and low zinc solution 23, which can be treated to remove further metals if desired and ultimately be discharged. Light solids containing flocculated biomass can also be separated in separator 22 or in a distinct separator upstream of separator 22 (not shown) and returned to the bioreactor 20 through 28. A part of the ZnS slurry may be returned to reactor 20 through 24 and a part is fed to the copper-precipitating reactor 10 and the arsenic-precipitating reactor 30 through 26 and 17/16 and 37/36 as described above. The remainder of the ZnS slurry is carried off through 25 for further processing and valorisation.

### Examples

### Example 1

A leaching stream containing 200 mg/l copper and 2000 mg/l zinc, having a pH varying between 2.5 and 3.5 and a temperature between 80 and 90°C is subjected to copper precipitation in a stirred first precipitation reactor having a total capacity of 500 m³ at a flow rate of 2000 m³/h (HRT 15 min). A zinc sulfide slurry containing 400 g/l of ZnS is fed to the first reactor at a rate of 1.5 m³/h. The pH in the first reactor is not controlled and remains between 2.5 and 3, and also the temperature is not controlled and remains between 80 and 90°C. The effluent of the first reactor is separated in an open thickener resulting in a settled CuS sludge volume of 51.2 m³/h, 49.7 m³/h of which is returned to the first reactor and the remaining 1.5 m³/h is discharged. As a result, the copper sulfide concentration in the first reactor is kept at 10 kg/m³ and the resulting SRT is about 8.4 h.

The separated liquid containing about 2200 mg/l zinc is fed to a well-mixed bioreactor having a volume of 6000 m³ controlled at a pH of 3.5 by addition of calcium carbonate and controlled at 80°C using a heat exchanger with cooling water if necessary and in which H₂S is produced by biological reduction of elemental sulfur (2300 kg/h) with ethanol (580 kg/h) as an electron donor. The biomass is initially obtained by sampling biomass from a sulfur-reducing hot pool, and further grown in repeated inoculations of stepwise increasing capacity of sulfur-reducing bioreactors operating at pH 3.5 and 80°C. The effluent of the bioreactor is separated in a covered thickener resulting in a settled ZnS sludge volume of 1190 m³/h containing 400 g/l ZnS, of which 1174 m³/h (98.6%) is returned to the bioreactor, 1.5 m³/h (0.13%) is returned to the first reactor and the remaining 15 m³/h (1.3%) is discharged. As a result, the solids concentration in the bioreactor is 150 kg/m³ and the resulting SRT is about 136 h (5.7 days). Around 9 % of the produced zinc sulfide is recycled to the copper precipitation reactor in order to precipitate the copper. The rest of the zinc sulfide is discharged and dewatered before shipment to a zinc smelter.

The Example described above illustrates that the process of this invention will significantly reduce both investment cost and operational cost compared to state of the art flow sheets as the bioreactor and the zinc precipitation reactor are combined in one 6000 m³ bio/precipitation process unit and H₂S gas recycle flows can be omitted. Building a separate H₂S production unit would significantly increase the investment cost. In case of a biological H₂S production plant another 6000 m³ bioreactor would be required besides the zinc precipitation reactors, Eliminating the need for 16,000 Nm³/h 10% H₂S gas recycle for zinc precipitation and 1600 Nm³/h H₂S gas recycle for copper precipitation reduces costs further as expensive H₂S gas recycle compressors are not required, cost for energy consumption is reduced and cost for H₂S safety related issues are much lower.

## Claims

1. A process for selectively separating at least one first heavy metal having a first solubility of its sulfide from a liquid medium containing at least the first heavy metal in dissolved form, by:
(a) contacting the liquid medium with a precipitate of a sulfide of at least one second heavy metal, said sulfide of the at least one second heavy metal having a second solubility, said second solubility being higher than said first solubility, in a first reactor, to produce a precipitate of a sulfide of the at least one first heavy metal and a solution containing the at least one second heavy metal;
(b) separating the precipitate of the at least one first heavy metal sulfide from the solution containing the at least one second heavy metal;
(c) contacting the solution of the at least one second heavy metal with a source of sulfide produced by biological conversion of a sulfur compound, in a second reactor, to produce a precipitate of a sulfide of the at least one second heavy metal and a treated solution, and
(d) returning at least part of the precipitate of the sulfide of the at least one second heavy metal to step (a).

2. The process according to claim 1, wherein a pH below 3, and/or a hydraulic retention time between 0.1 and 5 hours is maintained in the first reactor, preferably wherein a pH between 0 and 2.5, and/or a hydraulic retention time between 0.2 and 2 hours is maintained in the first reactor.

3. The process according claim 2, wherein a part of the precipitate separated in step (b) is returned to the first reactor and a solids retention time between 0.3 and 7 days is maintained in the first reactor.

4. The process according to any one of claims 1-3, wherein a pH between 2 and 5 and/or a hydraulic retention time between 0.5 and 12 hours is maintained in the second reactor, preferably wherein a hydraulic retention time between 1 and 8 hours is maintained in the second reactor.

5. The process according to any one of the preceding claims, wherein the at least one first heavy metal comprises copper, preferably wherein the liquid medium contains copper at a level of between 20 and 2000 mg/l.

6. The process according to any one of the preceding claims, wherein the at least one second heavy metal is selected from zinc, nickel, cobalt and iron, preferably wherein the liquid medium contains zinc, nickel, cobalt and/or iron at a total level of between 100 mg and 10,000 mg/l, more preferably wherein the at least one second heavy metal comprises zinc.

7. The process according to any one of the preceding claims, wherein the liquid medium further contains at least one third heavy metal having a third solubility of its sulfide, which third solubility is intermediate between said first solubility and said second solubility, further comprising:
(a') contacting the solution separated in step (b) containing the at least one second heavy metal and the at least one third heavy metal with a precipitate of a sulfide of the at least one second heavy metal, in a third reactor between the first and second reactor, to produce a precipitate of a sulfide of the at least one third heavy metal and a solution containing the at least one second heavy metal, and
(b') separating the precipitate of the at least one third heavy metal sulfide from the solution containing the at least one second heavy metal; and continuing with step (c).

8. The process according to claim 7, wherein a pH below 3 and/or a hydraulic retention time between 0.1 and 5 hours and/or a solids retention time between 0.3 and 7 days is maintained in the third reactor, preferably wherein the at least one third heavy metal is selected from lead, cadmium and arsenic, even more preferably wherein the at least one third heavy metal comprises arsenic.

9. The process according to any one of the preceding claims, wherein the amount of precipitate of the sulfide of the at least one second heavy metal used in step (a) and optionally in step (a') is substantially equimolar to the level of the at least one first heavy metal, and optionally the at least one third heavy metal, respectively, and is controlled by measuring the level of the at least one first heavy metal, and optionally the at least one third heavy metal in the liquid medium and/or in the solution produced in step (a) and optionally in step (a').

10. The process according to any one of the preceding claims, wherein the source of sulfide is produced by biological reduction of elemental sulfur, thiosulfate or sulfate and an electron donor is used for the biological reduction, preferably, wherein the electron donor is selected from hydrogen gas and organic compounds, more preferably wherein the source of sulfide is produced by biological disproportionation of elemental sulfur (or thiosulfate or sulfite).

11. The process according to any one of the preceding claims, wherein the biological conversion of sulfur compounds is carried out in the same (second) reactor.

12. The process according to claim 11, wherein a biomass retention time of between 2 and 30 days is maintained in the second reactor.

13. The process according to claim 11 or 12, wherein supersaturation in the second reactor is minimised by controlling excess sulfide and by mixing, preferably wherein a temperature between 40 and 95 °C is maintained in the second reactor using thermophilic bacteria.

14. The process according to any one of the preceding claims, wherein said first reactor consists of a plurality of first reactors for contacting the liquid medium with a precipitate of a sulfide of the at least one heavy metal, the plurality preferably being in direct fluid communication with each other.

15. The process according to any one of the preceding claims, wherein the liquid medium originates from a mining industry.

## Patentansprüche

1. Verfahren zum selektiven Trennen von mindestens einem ersten Schwermetall mit einer ersten Löslichkeit von seinem Sulfid aus einem flüssigen Medium, das mindestens das erste Schwermetall in gelöster Form enthält, wobei das Verfahren durch die folgenden Schritte gekennzeichnet ist:
(a) in einem ersten Reaktor ein Bewerkstelligen eines Kontaktes des flüssigen Mediums mit einer Fällung eines Sulfids von mindestens einem zweiten Schwermetall, wobei das Sulfid des mindestens einen zweiten Schwermetalls eine zweite Löslichkeit aufweist, wobei die zweite Löslichkeit höher als die erste Löslichkeit ist, um eine Fällung eines Sulfids des mindestens einen ersten Schwermetalls und eine Lösung, die das mindestens eine zweite Schwermetall enthält, zu erzeugen;
(b) Trennen der Fällung des mindestens einen ersten Schwermetallsulfids aus der Lösung, die das mindestens eine zweite Schwermetall enthält;
(c) in einem zweiten Reaktor ein Bewerkstelligen eines Kontaktes des mindestens einen zweiten Schwermetalls mit einer Sulfidquelle, die durch eine biologische Umwandlung einer Schwefelverbindung erzeugt worden ist, um eine Fällung eines Sulfids des mindestens einen zweiten Schwermetalls und eine behandelte Lösung zu erzeugen; und
(d) Zurückbringen mindestens eines Teiles der Fällung des Sulfids des mindestens einen zweiten Schwermetalls zum Schritt (a).

2. Verfahren nach Anspruch 1, wobei ein pH-Wert unter 3 und/oder eine hydraulische Verweilzeit zwischen 0,1 und 5 Stunden in dem ersten Reaktor aufrechterhalten wird, wobei vorzugsweise ein pH-Wert zwischen 0 und 2,5 und/oder eine hydraulische Verweilzeit zwischen 0,2 und 2 Stunden in dem ersten Reaktor aufrechterhalten wird.

3. Verfahren nach Anspruch 2, wobei ein Teil der Fällung, die in dem Schritt (b) abgetrennt worden ist, zu dem ersten Reaktor zurückkehrt, und wobei eine Feststoffverweilzeit zwischen 0,3 und 7 Tagen in dem ersten Reaktor aufrechterhalten wird.

4. Verfahren nach einem der Ansprüche 1 bis 3, wobei ein pH-Wert zwischen 2 und 5 und/oder eine hydraulische Verweilzeit zwischen 0,5 und 12 Stunden in dem zweiten Reaktor aufrechterhalten wird, wobei vorzugsweise eine hydraulische Verweilzeit zwischen 1 und 8 Stunden in dem zweiten Reaktor aufrechterhalten wird.

5. Verfahren nach einem der vorhergehenden Ansprüche, wobei das mindestens eine erste Schwermetall Kupfer umfasst, wobei vorzugsweise das flüssige Medium Kupfer mit einem Gehalt zwischen 20 und 2000 mg/l enthält.

6. Verfahren nach einem der vorhergehenden Ansprüche, wobei das mindestens eine zweite Schwermetall ausgewählt ist aus Zink, Nickel, Cobalt und/oder Eisen mit einem Gesamtgehalt zwischen 100 mg und 10.000 mg/l, wobei stärker bevorzugt wird, dass das mindestens eine zweite Schwermetall Zink umfasst.

7. Verfahren nach einem der vorhergehenden Ansprüche, wobei das flüssige Medium ferner mindestens ein drittes Schwermetall mit einer dritten Löslichkeit von seinem Sulfid enthält, wobei die dritte Löslichkeit zwischen der ersten Löslichkeit und der zweiten Löslichkeit liegt, und wobei das Verfahren ferner die folgenden Schritte umfasst:
(a') in einem dritten Reaktor zwischen dem ersten und zweiten Reaktor ein Bewerkstelligen eines Kontaktes der Lösung, die in dem Schritt (b) abgetrennt worden ist und die das mindestens eine zweite Schwermetall sowie das mindestens eine dritte Schwermetall enthält, mit einer Fällung eines Sulfids des mindestens einen zweiten Schwermetalls, um eine Fällung eines Sulfids des mindestens einen dritten Schwermetalls und eine Lösung, die das mindestens eine zweite Schwermetall enthält, zu erzeugen, und
(b') Trennen der Fällung des mindestens einen dritten Schwermetallsulfids aus der Lösung, die das mindestens eine zweite Schwermetall enthält; und Fortsetzen mit dem Schritt (c).

8. Verfahren nach Anspruch 7, wobei ein pH-Wert unter 3 und/oder eine hydraulische Verweilzeit zwischen 0,1 und 5 Stunden und/oder eine Feststoffverweilzeit zwischen 0,3 und 7 Tagen in dem dritten Reaktor aufrechterhalten wird, wobei vorzugsweise das mindestens eine dritte Schwermetall ausgewählt ist aus Blei, Cadmium und Arsen, wobei erst recht stärker bevorzugt wird, dass das mindestens eine dritte Schwermetall Arsen umfasst.

9. Verfahren nach einem der vorhergehenden Ansprüche, wobei die Menge der Fällung des Sulfids des mindestens einen zweiten Schwermetalls, das im Schritt (a) und wahlweise im Schritt (a') verwendet worden ist, im Wesentlichen äquimolar zu dem Gehalt des mindestens einen ersten Schwermetalls bzw. wahlweise zu dem mindestens einen dritten Schwermetall ist, und wobei die Menge gesteuert wird, indem der Gehalt des mindestens einen ersten Schwermetalls und wahlweise des mindestens einen dritten Schwermetalls in dem flüssigen Medium und/oder in der Lösung, die im Schritt (a) und wahlweise im Schritt (a') erzeugt worden ist, gemessen wird.

10. Verfahren nach einem der vorhergehenden Ansprüche, wobei die Sulfidquelle durch eine biologische Reduktion von elementarem Schwefel, Thiosulfat oder Sulfat erzeugt wird, und wobei ein Elektronendonator für die biologische Reduktion verwendet wird, wobei der Elektronendonator vorzugsweise aus Wasserstoffgas und aus organischen Verbindungen ausgewählt ist, wobei stärker bevorzugt ist, dass die Sulfidquelle durch eine biologische Disproportionierung von elementarem Schwefel (oder Thiosulfat oder Sulfat) erzeugt wird.

11. Verfahren nach einem der vorhergehenden Ansprüche, wobei die biologische Umwandlung von Schwefelverbindungen in demselben (zweiten) Reaktor ausgeführt wird.

12. Verfahren nach Anspruch 11, wobei eine Biomasseverweilzeit zwischen 2 und 30 Tagen in dem zweiten Reaktor aufrechterhalten wird.

13. Verfahren nach Anspruch 11 oder 12, wobei eine Übersättigung in dem zweiten Reaktor minimiert wird, indem das Überschusssulfid gesteuert wird und indem gemischt wird, wobei unter Verwendung von thermophilen Bakterien vorzugsweise eine Temperatur zwischen 40 und 95 °C in dem zweiten Reaktor aufrechterhalten wird.

14. Verfahren nach einem der vorhergehenden Ansprüche, wobei der erste Reaktor aus mehreren ersten Reaktoren besteht, um einen Kontakt des flüssigen Mediums mit einer Fällung eines Sulfids des mindestens einen Schwermetalls zu bewerkstelligen, wobei die mehreren ersten Reaktoren vorzugsweise in einer direkten Fluidkommunikation miteinander stehen.

15. Verfahren nach einem der vorhergehenden Ansprüche, wobei das flüssige Medium von einer Bergwerksindustrie stammt.

## Revendications

1. Procédé pour séparer sélectivement au moins un premier métal lourd ayant une première solubilité de son sulfure depuis un milieu liquide contenant au moins le premier métal lourd sous forme dissoute, par les étapes consistant à :
(a) mettre en contact le milieu liquide avec un précipité d'un sulfure d'au moins un deuxième métal lourd, ledit sulfure du au moins un deuxième métal lourd ayant une deuxième solubilité, ladite deuxième solubilité étant supérieure à ladite première solubilité, dans un premier réacteur, pour produire un précipité d'un sulfure du au moins un premier métal lourd et une solution contenant le au moins un deuxième métal lourd ;
(b) séparer le précipité du sulfure du au moins un premier métal lourd depuis la solution contenant le au moins un deuxième métal lourd ;
(c) mettre en contact la solution du au moins un deuxième métal lourd avec une source de sulfure produite par conversion biologique d'un composé de soufre, dans un deuxième réacteur, pour produire un précipité d'un sulfure du au moins un deuxième métal lourd et une solution traitée, et
(d) renvoyer au moins une partie du précipité du sulfure du au moins un deuxième métal lourd à l'étape (a).

2. Procédé selon la revendication 1, dans lequel un pH inférieur à 3, et/ou un temps de rétention hydraulique compris entre 0,1 et 5 heures sont maintenus dans le premier réacteur, de préférence dans lequel un pH compris entre 0 et 2,5 et/ou un temps de rétention hydraulique compris entre 0,2 et 2 heures sont maintenus dans le premier réacteur.

3. Procédé selon la revendication 2, dans lequel une partie du précipité séparé à l'étape (b) est renvoyée au premier réacteur et un temps de rétention de solides entre 0,3 et 7 jours est maintenu dans le premier réacteur.

4. Procédé selon l'une quelconque des revendications 1 à 3, dans lequel un pH entre 2 et 5 et/ou un temps de rétention hydraulique entre 0,5 et 12 heures sont maintenus dans le deuxième réacteur, de préférence dans lequel un temps de rétention hydraulique entre 1 et 8 heures est maintenu dans le deuxième réacteur.

5. Procédé selon l'une quelconque des revendications précédentes, dans lequel le au moins un premier métal lourd comprend du cuivre, de préférence dans lequel le milieu liquide contient du cuivre à un niveau compris entre 20 et 2 000 mg/l.

6. Procédé selon l'une quelconque des revendications précédentes, dans lequel le au moins un deuxième métal lourd est choisi parmi du zinc, nickel, cobalt et fer, de préférence dans lequel le milieu liquide contient du zinc, nickel, cobalt et/ou fer à un niveau total compris entre 100 mg et 10 000 mg/l, de manière plus préférée dans lequel le au moins un deuxième métal lourd comprend du zinc.

7. Procédé selon l'une quelconque des revendications précédentes, dans lequel le milieu liquide contient en outre au moins un troisième métal lourd ayant une troisième solubilité de son sulfure, laquelle troisième solubilité est intermédiaire entre ladite première solubilité et ladite deuxième solubilité, comprenant en outre les étapes consistant à :
(a') mettre en contact la solution séparée à l'étape (b) contenant le au moins un deuxième métal lourd et le au moins un troisième métal lourd avec un précipité d'un sulfure du au moins un deuxième métal lourd, dans un troisième réacteur entre le premier et le deuxième réacteur, pour produire un précipité d'un sulfure du au moins un troisième métal lourd et une solution contenant le au moins un deuxième métal lourd, et
(b') séparer le précipité du sulfure du au moins un troisième métal lourd depuis la solution contenant le au moins un deuxième métal lourd ; et poursuivre avec l'étape (c).

8. Procédé selon la revendication 7, dans lequel un pH inférieur à 3 et/ou un temps de rétention hydraulique entre 0,1 et 5 heures et/ou un temps de rétention de solides entre 0,3 et 7 jours sont maintenus dans le troisième réacteur, de préférence dans lequel le au moins un troisième métal lourd est choisi parmi du plomb, cadmium et arsenic, de manière encore plus préférée dans lequel le au moins un troisième métal lourd comprend de l'arsenic.

9. Procédé selon l'une quelconque des revendications précédentes, dans lequel la quantité de précipité du sulfure du au moins un deuxième métal lourd utilisé à l'étape (a) et facultativement à l'étape (a') est sensiblement équimolaire au niveau du au moins un premier métal lourd, et facultativement du au moins un troisième métal lourd, respectivement, et est commandée en mesurant le niveau du au moins un premier métal lourd, et facultativement du au moins un troisième métal lourd dans le milieu liquide et/ou dans la solution produite à l'étape (a) et facultativement à l'étape (a').

10. Procédé selon l'une quelconque des revendications précédentes, dans lequel la source de sulfure est produite par réduction biologique de soufre élémentaire, de thiosulfate ou de sulfate et un donneur d'électrons est utilisé pour la réduction biologique, de préférence, dans lequel le donneur d'électrons est choisi parmi de l'hydrogène gazeux et des composés organiques, de manière plus préférée dans lequel la source de sulfure est produite par dismutation biologique de soufre élémentaire (ou thiosulfate ou sulfite).

11. Procédé selon l'une quelconque des revendications précédentes, dans lequel la conversion biologique de composés soufrés est effectuée dans le même (deuxième) réacteur.

12. Procédé selon la revendication 11, dans lequel un temps de rétention de biomasse compris entre 2 et 30 jours est maintenu dans le deuxième réacteur.

13. Procédé selon la revendication 11 ou 12, dans lequel une sursaturation dans le deuxième réacteur est minimisée en commandant un excès de sulfure et en mélangeant, de préférence dans lequel une température comprise entre 40 et 95°C est maintenue dans le deuxième réacteur en utilisant des bactéries thermophiles.

14. Procédé selon l'une quelconque des revendications précédentes, dans lequel ledit premier réacteur est constitué d'une pluralité de premiers réacteurs pour mettre en contact le milieu liquide avec un précipité d'un sulfure du au moins un métal lourd, la pluralité étant de préférence en communication fluidique directe les uns avec les autres.

15. Procédé selon l'une quelconque des revendications précédentes, dans lequel le milieu liquide provient d'une industrie minière.
